# EUROPEAN PATENT APPLICATION

(11) **EP 4 503 627 A1**
(43) Date of publication of application: **05.02.2025**
(21) Application number: 23774951.0
(22) Date of filing: 22.03.2023
(51) Int. Cl.: H04N 21/854

(54) **DISPLAY METHOD AND VIDEO EDITING SYSTEM**

(30) Priority: 25.03.2022 JP 2022050191
(71) Applicant: PANASONIC INTELLECTUAL PROPERTY MANAGEMENT CO., LTD., Kadoma-shi Osaka 571-0057 (JP)
(72) Inventor: KAMOTANI, Yusuke, Osaka 571-0057 (JP); OKAZAKI, Yoshinori, Osaka 571-0057 (JP); NAKAJIMA, Yurika, Osaka 571-0057 (JP)
(74) Representative: Eisenführ Speiser
(86) International application number: PCT/JP2023/011216
(87) International publication number: WO 2023/182356

(57) **Abstract**

This display method is a display method for generating an output video by selectively using a plurality of video streams. The display method includes acquiring the plurality of video streams from a plurality of video sources; displaying on a display an image indicating the plurality of video streams acquired; and receiving a selection by a user of a first video stream to be used for the output video among the plurality of video streams displayed, in which in the image, a display mode is different between the first video stream selected and a second video stream which is not selected by the user as a video stream to be used for the output video among the plurality of video streams.

## Description

### TECHNICAL FIELD

The present disclosure relates to a display method and a video editing system.

### BACKGROUND ART

Conventionally, a technique for switching videos has been proposed. PTL 1 discloses a video signal switching device that switches a plurality of moving picture coding experts group (MPEG) streams to be input while adding an effect and outputs the MPEG streams as one MPEG stream.

### Citation List

### Patent Literature

PTL 1: Unexamined Japanese Patent Publication No. H10-93860

### SUMMARY OF THE INVENTION

The present disclosure provides a display method and the like that can support editing of a video stream by a user.

A display method according to an aspect of the present disclosure is for generating an output video by selectively using a plurality of video streams, and includes: acquiring the plurality of video streams from a plurality of video sources; displaying on a display an image indicating the plurality of video streams acquired; and receiving a selection by a user of a first video stream to be used for the output video among the plurality of video streams displayed, in which in the image, a display mode is different between the first video stream selected and a second video stream which is not selected by the user as a video stream to be used for the output video among the plurality of video streams.

The display method and the like according to one aspect of the present disclosure can support editing of a video stream by a user.

### BRIEF DESCRIPTION OF THE DRAWINGS

Fig. 1 is a block diagram illustrating a functional configuration of a video editing system according to an exemplary embodiment.
Fig. 2 is a diagram illustrating an example of a graphical user interface (GUI).
Fig. 3 is a flowchart of Example 1 of the connection operation between a camera and a video hub.
Fig. 4 is a flowchart of Example 1 of an operation of assigning a video stream to a video frame.
Fig. 5 is a flowchart of Example 2 of the connection operation between a camera and a video hub.
Fig. 6 is a flowchart of Example 2 of an operation of assigning a video stream to a video frame.
Fig. 7 is a view illustrating Modification 2 of a video source list.

### DESCRIPTION OF EMBODIMENT

Hereinafter, exemplary embodiments will be described with reference to the drawings. Note that the exemplary embodiments described below illustrate comprehensive or specific examples. Numerical values, shapes, materials, components, arrangement positions and connection modes of the components, steps, order of the steps, and the like shown in the following exemplary embodiments are merely examples, and are not intended to limit the present disclosure. Further, among the components in the following exemplary embodiments, components not recited in the independent claims are described as arbitrary components.

Each drawing is a schematic diagram, and is not necessarily strictly illustrated. In the drawings, substantially the same components are denoted by the same reference numerals, and redundant description may be omitted or simplified.

### (Exemplary embodiment)

### [Configuration]

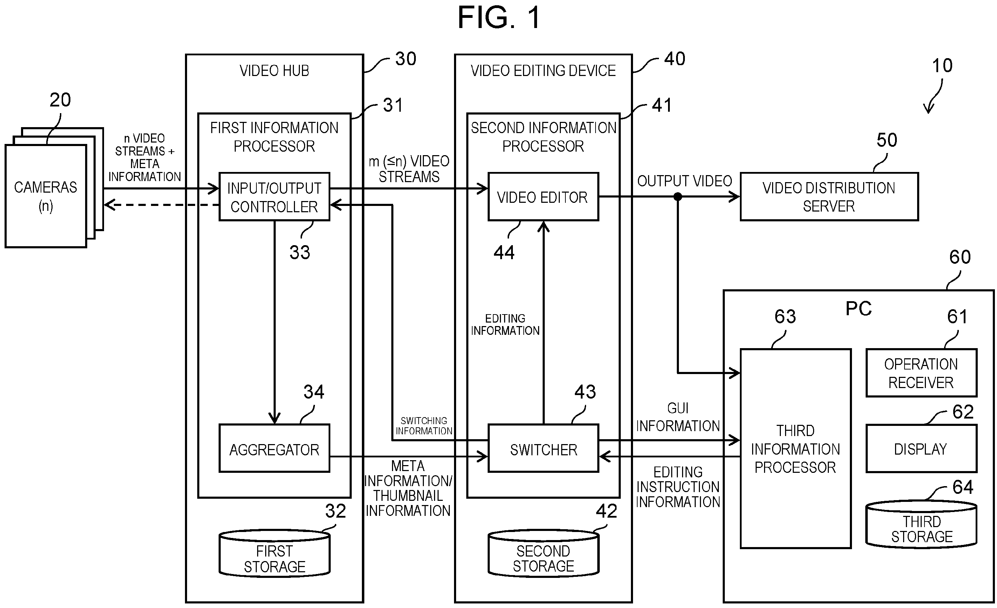

First, a configuration of the video editing system according to an exemplary embodiment will be described. Fig. 1 is a block diagram illustrating a functional configuration of a video editing system according to an exemplary embodiment.

Video editing system 10 is a system that can efficiently perform video editing by selectively using a part of a large number of video streams under a situation where computer resources are limited. Video editing system 10 is a system used in, for example, a television broadcasting station or a video distribution station via the Internet. The output video generated by video editing system 10 is, for example, live-distributed by video distribution server 50, but may be accumulated in video distribution server 50 as ondemand video content. Note that the output video is, in other words, the final video stream after editing.

As illustrated in Fig. 1, video editing system 10 includes a plurality of cameras 20, video hub 30, video editing device 40, video distribution server 50, and personal computer (PC) 60. Although not illustrated in detail in Fig. 1, these devices communicate with each other through a wide area communication network such as the Internet or a local network.

Each of the plurality of cameras 20 is an example of a video source, captures a video, and outputs a video stream (moving image) of the captured video to video hub 30 on a real-time basis. Each of the plurality of cameras 20 is implemented by a CMOS image sensor or the like. To a video stream output from each of the plurality of cameras 20, meta information of camera 20 is given. In other words, the meta information is attribute information, and can also be used as identification information for identifying the plurality of cameras 20 (a plurality of video streams). The total number of the plurality of cameras 20 is, for example, n (n is a natural number). Note that, in the present exemplary embodiment, description will be made on the assumption that a video stream includes a sound signal (audio stream).

Video hub 30 receives a video stream from each of the plurality of cameras 20, and outputs a part of the input video stream to video editing device 40. Video hub 30 is, for example, an on-premise device, but may be a virtual device (for the user) configured on a cloud server. Video hub 30 includes first information processor 31 and first storage 32.

First information processor 31 performs information processing related to input and output of a video stream. First information processor 31 is implemented by, for example, a microcomputer, but may be implemented by a processor. First information processor 31 includes input/output controller 33 and aggregator 34 as functional components.

Input/output controller 33 outputs m (≤ n) video streams among the n video streams input to input/output controller 33 to video editor 44 based on the switching information acquired from video editing device 40. Note that m video streams do not include meta information.

Aggregator 34 acquires n video streams that are input to input/output controller 33 and each include meta information, and generates a thumbnail of each of the acquired n video streams. The thumbnail is, for example, a still image, but may be a moving image. Furthermore, aggregator 34 outputs the generated thumbnail information of the thumbnail and the meta information of the n video streams to switcher 43. Note that aggregator 34 may generate a combined video stream obtained by combining n video streams instead of the thumbnail information, and output the combined video stream to switcher 43.

The functions of input/output controller 33 and aggregator 34 as described above are implemented by hardware such as a microcomputer or a processor constituting first information processor 31 executing a computer program (software) stored in first storage 32.

First storage 32 is a storage that stores information necessary for realizing the functions of input/output controller 33 and aggregator 34. The information stored in first storage 32 includes a computer program executed by first information processor 31. First storage 32 is implemented by, for example, a semiconductor memory, a hard disk drive (HDD), or the like.

Video editing device 40 generates an output video by using at least one of video streams output from video hub 30, and generates GUI information for providing a GUI to display 62 of PC 60. Video editing device 40 is, for example, an on-premise device, but may be a virtual device (for the user) configured on a cloud server. Video editing device 40 includes second information processor 41 and second storage 42.

Second information processor 41 performs information processing related to generation of the output video and the GUI information. Second information processor 41 is implemented by, for example, a microcomputer, but may be implemented by a processor. Second information processor 41 includes switcher 43 and video editor 44 as functional components.

Switcher 43 outputs the GUI information to third information processor 63 to provide (display) the GUI on display 62. The GUI information includes thumbnail information and meta information acquired from aggregator 34.

In addition, switcher 43 acquires the editing instruction information output from third information processor 63 according to the input to the GUI of the user, and outputs the switching information based on the acquired editing instruction information to input/output controller 33. As a result, the user can select the video stream output from input/output controller 33 to video editor 44 by the input to the GUI.

Further, switcher 43 outputs, to video editor 44, editing information indicating how to combine the video streams to generate the output video based on the acquired editing instruction information.

Video editor 44 generates an output video based on the video stream acquired from input/output controller 33 of video hub 30 and the editing information acquired from switcher 43. Further, video editor 44 outputs the generated output video to each of video distribution server 50 and PC 60 (third information processor 63).

The functions of switcher 43 and video editor 44 as described above are implemented by hardware such as a microcomputer or a processor constituting second information processor 41 executing a computer program (software) stored in second storage 42.

Second storage 42 is a storage device that stores information necessary for realizing the functions of switcher 43 and video editor 44. The information stored in second storage 42 includes a computer program executed by second information processor 41. Second storage 42 is implemented by, for example, a semiconductor memory, an HDD, or the like.

Video distribution server 50 acquires the output video from video editor 44 of video editing device 40, and distributes the acquired output video. The output video is distributed through, for example, a wide area communication network such as the Internet, but may be distributed by a broadcast wave. That is, video distribution server 50 may distribute the output video via the Internet or as television broadcasting.

PC 60 displays a GUI and receives an input for the user to edit the video through the GUI. Specifically, PC 60 includes operation receiver 61, display 62, third information processor 63, and third storage 64.

Operation receiver 61 receives a user's operation (such as an input to the GUI). Operation receiver 61 is implemented by a mouse, a keyboard, a touch panel, or the like.

Display 62 displays the GUI. Display 62 is implemented by, for example, a display panel such as a liquid crystal panel or an organic electro luminescence (EL) panel.

Third information processor 63 displays a GUI on display 62 based on the GUI information acquired from switcher 43 of video editing device 40. In addition, third information processor 63 outputs the editing instruction information to switcher 43 of video editing device 40 according to the user's operation received by operation receiver 61. Third information processor 63 may be implemented by, for example, a microcomputer, but may be implemented by a processor or a dedicated circuit. The function of third information processor 63 is implemented by hardware such as a microcomputer or a processor constituting third information processor 63 executing a computer program (software) stored in third storage 64.

Third storage 64 is a storage device that stores information necessary for implementing the functions of third information processor 63. The information stored in third storage 64 includes a computer program executed by third information processor 63. Third storage 64 is implemented by, for example, a semiconductor memory, an HDD, or the like.

The configuration of video editing system 10 has been described above. A general video editing system includes a matrix switcher (corresponding to video hub 30) and a video editing device (corresponding to video editing device 40), and another user operates each of the matrix switcher and the video editing device. For example, the first user operates the video editing device to set which channel among the plurality of input channels of the video editing device is to be used for video editing, and the second user operates the matrix switcher to set which of the plurality of input channels of the video editing device the video stream of which camera is to be output to.

On the other hand, in video editing system 10, switcher 43 of video editing device 40 automatically performs the channel setting (details will be described later), so that one user can perform both the setting of the video stream and the video editing by operating PC 60.

### [Generation Method of Output Video]

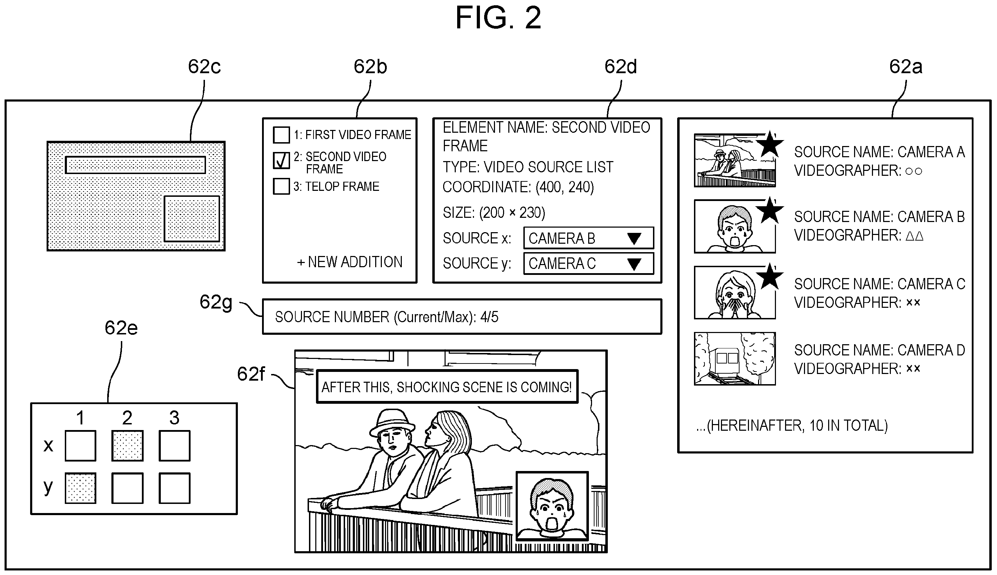

Next, a generation method of output video (in other words, a video editing method) will be described with reference to a GUI displayed on display 62 of PC 60. Fig. 2 is a diagram illustrating an example of the GUI. Note that, in the following description of the generation method of output video, it is assumed that the number (in other words, the number of video sources or cameras 20) n of video streams input to video hub 30 is n = 10, and the number m of video streams output from video hub 30 is m = 5. The user's operation on the GUI is received by operation receiver 61, but the description of this point is appropriately omitted below.

As illustrated in Fig. 2, the GUI includes video source list 62a, scene element list 62b, scene arranger 62c, property list 62d, switching section 62e, output video display 62f, and capacity display 62g.

Video source list 62a is an example of images indicating a plurality of video streams output from the plurality of cameras 20. Video source list 62a includes the thumbnails of all the video streams (ten video streams) input to video hub 30 and the meta information (in the example of Fig. 2, the source name and the photographer) of all the video sources. The thumbnail is displayed based on the thumbnail information included in the GUI information, and the meta information corresponds to at least a part of the meta information included in the GUI information.

The user adds a scene element in scene element list 62b, and combines scene elements in scene arranger 62c. As a method of combining scene elements, a video synthesis method such as Picture In Picture is exemplified. In the example of Fig. 2, three scene elements: a first video frame; a second video frame; and a telop frame, are combined.

Next, the user selects a video stream to be displayed in a video frame in the scene elements. Specifically, the user can select the video frame by checking the check box of scene element list 62b and select the video stream (video source) to be displayed in the selected video frame from property list 62d.

Here, the user can preset two or less video streams (source x and source y in Fig. 2) in one video frame, and the user can switch which of the two video streams preset in one video frame is displayed by an operation to switching section 62e. Numbers displayed on switching section 62e indicate numbers of video frames, and alphabets displayed on switching section 62e indicate preset video streams (source x and source y). For example, when displaying the video stream preset to the source x in first video frame, the user may select the button located at a coordinate (1, x).

When presetting the video stream, the user selects the video stream from a pull-down menu of property list 62d. At this time, a display mode of the thumbnail in video source list 62a such that the thumbnail corresponding to the video stream being selected is displayed larger than other thumbnails, is popped up, or is surrounded by a frame may be interlocked with the selection in the pull-down menu. When the video stream is preset, an icon (a star-shaped icon in the example of Fig. 2) is given to the thumbnail of the preset video stream.

Note that it is not essential that an icon is added to the thumbnail of the preset video stream. In video source list 62a, a thumbnail of the first video stream preset in the video frame among the plurality of video streams and a thumbnail of the second video stream not preset in the video frame are only required to have different display modes. For example, among the thumbnails of the first video stream and the thumbnails of the second video stream, only the thumbnail of the first video stream may be displayed in a frame, or only the thumbnail of the first video stream may be displayed in color. The video stream preset in the video frame is, in other words, the video stream selected by the user as the video stream to be used for the output video, and the video stream not preset in the video frame is, in other words, the video stream not selected by the user as the video stream to be used for the output video.

Note that it is sufficient that at least one video stream is preset in the video frame, and it is not essential that two video streams are preset. The user can change the video stream displayed in the video frame by switching the preset video stream from the pull-down menu without using switching section 62e.

When the editing of the video as described above is completed, third information processor 63 of PC 60 outputs the editing instruction information indicating the edited content of the video to switcher 43. The editing instruction information includes arrangement information indicating arrangement (how to combine) of scene elements, stream information indicating a video stream to be displayed in a video frame, character information to be displayed in the telop frame, and the like. Note that the editing instruction information is output from third information processor 63 to switcher 43 every time a change occurs in the information included in the editing instruction information, for example. At this point, only the changed information may be included in the editing instruction information. For example, only the stream information may be included in the editing instruction information output when only the video stream to be displayed in the video frame is changed.

Upon acquiring the editing instruction information, switcher 43 outputs the switching information to input/output controller 33. Here, switcher 43 manages the vacancy (usage status) of the output channel of video hub 30 and the vacancy (usage status) of the input channel of video editing device 40 based on the second management information stored in second storage 42. Based on the switching information, switcher 43 can instruct input/output controller 33 to output a necessary video stream to video editor 44 of video editing device 40 by using a free channel.

Switcher 43 also outputs edit information to video editor 44. The editing information includes the arrangement information, the character information, and the input channel information. The input channel information is information indicating the video stream obtained from which input channel is to be displayed in which video frame.

Video editor 44 generates the output video based on the editing information and the video stream output from input/output controller 33 based on the switching information. Video editor 44 can distribute the output video by outputting the generated output video to video distribution server 50. Video editor 44 also outputs the output video to PC 60. As a result, the output video is also displayed on output video display 62f of the GUI (Fig. 2).

Note that the output video may be output from video editor 44 to switcher 43, and may be output from switcher 43 to PC 60 as a part of the GUI information. Furthermore, output video display 62f may display the output video distributed by video distribution server 50, and in this case, the output video does not need to be output from video editor 44 or switcher 43 to PC 60.

As described above, according to the GUI as illustrated in Fig. 2, since the thumbnails of all the video streams are displayed in video source list 62a, the user can edit the video (generate the output video) as if all the video streams have arrived at video editing device 40.

Note that, in practice, the number n of input channels of video editing device 40 is n = 5, which is smaller than the total number (m = 10) of the thumbnails of the plurality of video streams indicated by video source list 62a. Therefore, capacity display 62g displays the usage status (current usage number/upper limit number) of the input channel based on the GUI information described above. The upper limit number here is equal to the number of input channels. In other words, the current usage number is a number of first video streams simultaneously preset in a video frame.

In addition, in a case where the user performs an operation to simultaneously use the input channels exceeding the upper limit number, a warning is displayed on the GUI. That is, when the user performs an operation exceeding the upper limit number, switcher 43 further displays a warning on display 62. The warning is displayed in a superimposed manner (pop-up display) on the GUI of Fig. 2, for example.

### [Example 1 of operation of connecting camera and video hub]

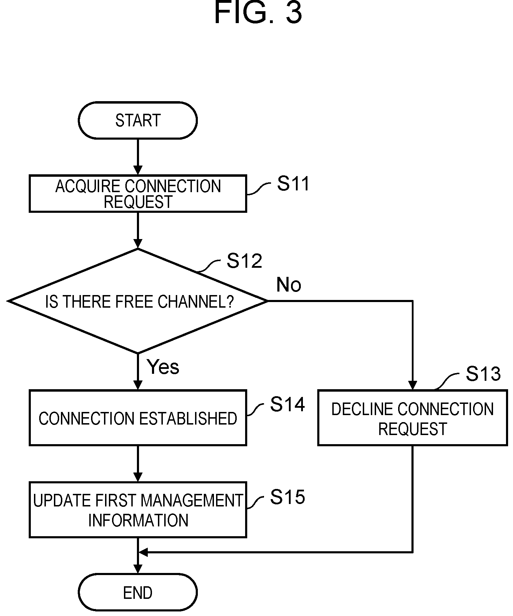

In order to realize the operation of video editing system 10 as described above, it is necessary to perform an operation of connecting camera 20 to video hub 30. Hereinafter, an operation of connecting camera 20 and video hub 30 will be described. Fig. 3 is a flowchart of Example 1 of the connection operation between camera 20 and video hub 30. Note that, in the following description of Fig. 3, the number of the input channel of video hub 30 is described as Hi[x] (x = 1, 2,...10).

When connected to video hub 30, camera 20 outputs a connection request. When input/output controller 33 acquires this connection request (S 11), input/output controller 33 determines whether there is a free channel in the input channel of video hub 30 (S12). When it is determined that there is no free channel (No in S12), input/output controller 33 rejects the connection request (S13). On the other hand, when input/output controller 33 determines that there is a free channel (Yes in S12), input/output controller 33 establishes connection between the free channel and camera 20 (S14). When the number of a free channel is Hi[x], a video stream from camera 20 is input to Hi[x],

Note that input/output controller 33 manages which camera 20 is connected to which input channel by storing the first management information in first storage 32, for example. After step S14, input/output controller 33 updates the first management information (S15).

As described above, video editing system 10 can appropriately connect camera 20 and video hub 30.

### [Example 1 of operation of assigning video stream to video frame]

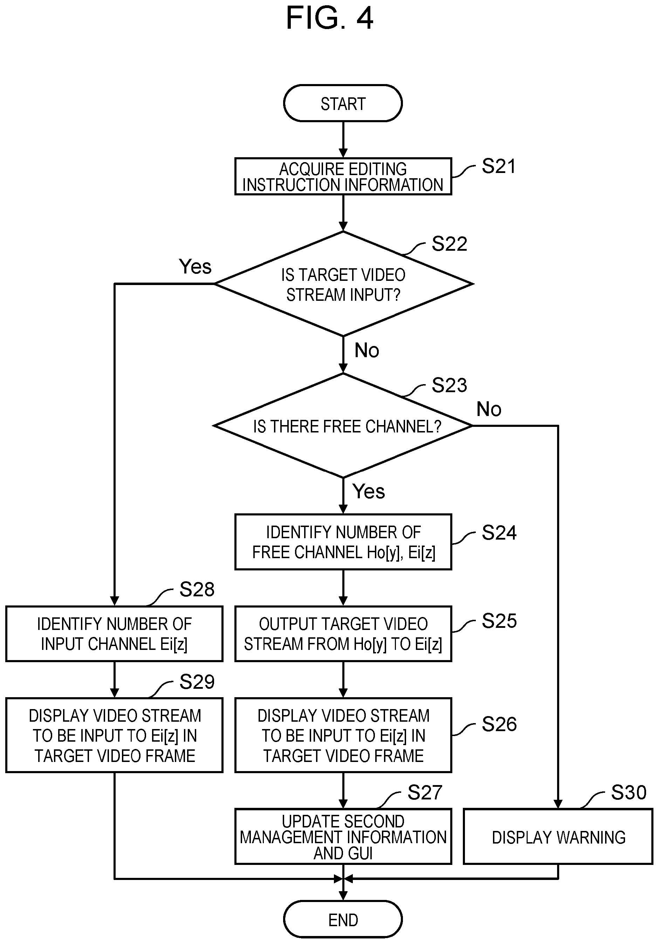

Furthermore, in order to realize the operation of video editing system 10 as described above, it is necessary to perform an operation of assigning a video stream (video source) to a video frame after Example 1 of the connection operation. An operation of assigning a video stream to a video frame will be described below. Fig. 4 is a flowchart of Example 1 of an operation of assigning a video stream to a video frame. Note that, in the following description, the number of the output channel of video hub 30 will be described as Ho[y] (y = 1, 2,...5), and the number of the input channel of video editing device 40 will be described as Ei[z] (z = 1, 2,...5).

When the user sets (presets) the video stream to be displayed in the video frame, third information processor 63 outputs the editing instruction information including the stream information indicating the video stream (hereinafter, it is also described as a target video stream) to be displayed in the video frame (hereinafter, it is also described as a target video frame). Switcher 43 acquires the editing instruction information from third information processor 63 (S21).

As described above, switcher 43 manages the vacancy (usage status) of the input channel of video editing device 40 based on the second management information stored in second storage unit 42. Therefore, switcher 43 refers to the second management information to determine whether the target video stream is input to the input channel of video editing device 40 (S22). When it is determined that the target video stream is not input (No in S22), switcher 43 refers to the second management information to determine whether there is a vacancy in the output channel of video hub 30 and the input channel of video editing device 40 (S23). Here, the vacancy in the input channel means that the video stream is not input to the input channel. The same applies to the case where there is a free output channel.

When it is determined that there is no vacancy in the output channel and the input channel (No in S23), switcher 43 displays a warning on the GUI (S30). In this case, the target video stream is not input to video editing device 40. Note that, in a case where there is no vacancy in the output channel of video hub 30 and the input channel of video editing device 40, the user needs to perform, for example, an operation of releasing the assignment of the video stream to the video frame on operation receiver 61 in order to create a vacancy.

On the other hand, when it is determined that there is a vacancy in the output channel and the input channel (Yes in S23), switcher 43 specifies the number Ho[y] of the free output channel and the number Ei[z] of the free input channel (S24), and outputs the switching information to input/output controller 33, thereby instructing input/output controller 33 to output the target video stream from Ho[y] to Ei[z] (S25). Note that, in a case where there is a plurality of vacancies in each of the output channel and the input channel, the channel number may be specified according to a predetermined algorithm, such as specifying a channel with a smaller channel number.

Furthermore, switcher 43 outputs the editing information to video editor 44, thereby instructing video editor 44 to display the video stream input to the input channel Ei[z] specified in step S24 in the target video frame (S26).

Next, switcher 43 updates the second management information and the GUI (S27). In the update of the GUI, specifically, the display content of capacity display 62g is updated, and a star-shaped icon is added to the thumbnail of the target video stream in video source list 62a.

In a case where it is determined in step S22 that the target video stream is input (Yes in S22), switcher 43 specifies the number Ei[z] of the input channel to which the target video stream is input (S28). Then, by outputting the editing information to video editor 44, switcher 43 instructs video editor 44 to display the video stream input to Ei[z] in the target video frame (S29).

As described above, video editing system 10 can selectively output, to video editing device 40, the video stream (maximum number: m) necessary for generating the output video (displaying on the video frame) among the n video streams input to video hub 30.

### [Example 2 of operation of connecting camera and video hub]

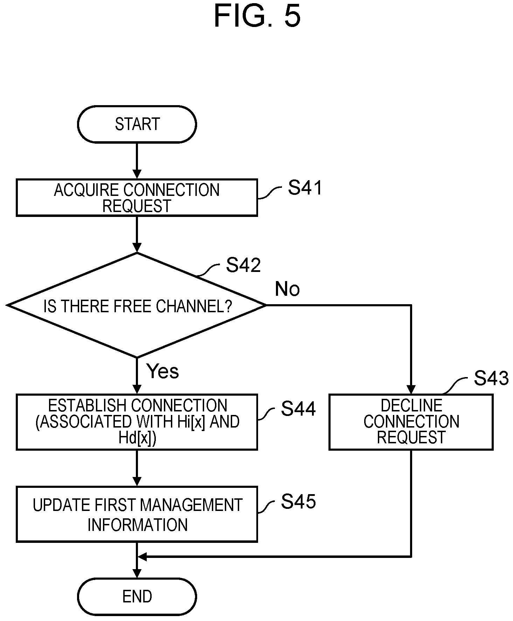

In video editing system 10, resolution instruction information for instructing the resolution of the video stream may be output from video hub 30 to camera 20. The resolution instruction information is output in a path corresponding to a broken line arrow from video hub 30 to camera 20 in Fig. 1. Hereinafter, the connection operation between camera 20 and video hub 30 when the resolution instruction information is output to camera 20 as described above will be described. Fig. 5 is a flowchart of Example 2 of the connection operation between camera 20 and video hub 30. Note that, in the following description of Fig. 5, the number of the input channel of video hub 30 is described as Hi[x](x = 1, 2,... 10), and the number of camera 20 is described as Hd[x](x = 1, 2,... 10).

When connected to video hub 30, camera 20 outputs a connection request. When input/output controller 33 acquires this connection request (S41), input/output controller 33 determines whether there is a free channel in the input channel of video hub 30 (S42). When it is determined that there is no free channel (No in S42), input/output controller 33 rejects the connection request (S43). On the other hand, when input/output controller 33 determines that there is a free channel (Yes in S42), input/output controller 33 establishes connection between the free channel and camera 20 (S44).

When the number of a free channel is Hi[x], a video stream from camera 20 with the number Hd[x] is input to Hi[x]. That is, for example, input/output controller 33 stores the first management information associated with Hi[x] and Hd[x] in first storage 32, thereby managing which camera 20 is connected to which input channel. After step S44, input/output controller 33 updates the first management information (S45).

As described above, video editing system 10 can appropriately connect camera 20 and video hub 30.

### [Example 2 of operation of assigning video stream to video frame]

Furthermore, the stage where Example 2 of the connection operation is performed is a stage before the user selects which video source to use for the output video, and camera 20 does not need to output a high-resolution video stream. Therefore, at the stage where Example 2 of the connection operation is performed (In other words, the default state), camera 20 outputs a low-resolution video stream.

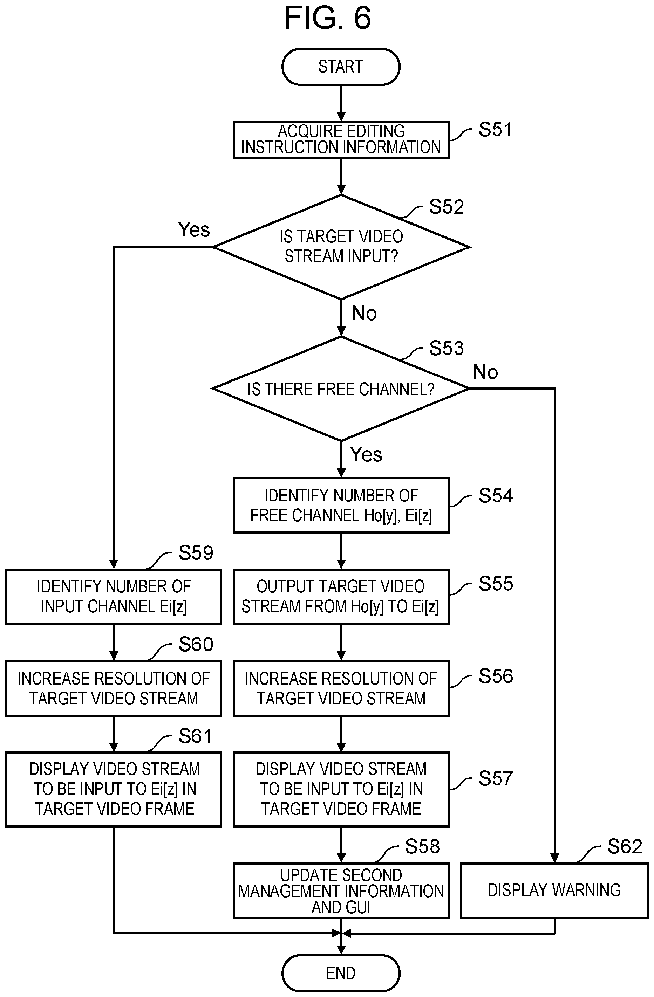

When the user performs an operation of assigning a video stream (video source) to a video frame after Example 2 of the connection operation is performed, a high-resolution video stream is required. An operation of assigning a video stream to a video frame in such a case will be described below. Fig. 6 is a flowchart of Example 2 of an operation of assigning a video stream to a video frame. Note that, in the following description, the number of the output channel of video hub 30 will be described as Ho[y] (y = 1, 2,...5), and the number of the input channel of video editing device 40 will be described as Ei[z] (z = 1, 2,...5). Furthermore, in the following description of Fig. 6, detailed description of processing similar to that of Example 1 of the assignment operation of Fig. 4 will be appropriately omitted.

When the user sets (presets) the video stream to be displayed in the video frame, third information processor 63 outputs the editing instruction information including the stream information indicating the video stream (hereinafter, it is also described as a target video stream) to be displayed in the video frame (hereinafter, it is also described as a target video frame). Switcher 43 acquires the editing instruction information from third information processor 63 (S51).

As described above, switcher 43 manages the vacancy (usage status) of the input channel of video editing device 40 based on the second management information stored in second storage unit 42. Therefore, switcher 43 refers to the second management information to determine whether the target video stream is input to the input channel of video editing device 40 (S52).

When it is determined that the target video stream is not input (No in S52), switcher 43 determine whether there is a vacancy in the output channel of video hub 30 and the input channel of video editing device 40 (S53).

When it is determined that there is no vacancy in the output channel and the input channel (No in S53), switcher 43 displays a warning on the GUI (S62). In this case, the target video stream is not input to video editing device 40.

On the other hand, when it is determined that there is a vacancy in the output channel and the input channel (Yes in S53), switcher 43 specifies the number Ho[y] of the free output channel and the number Ei[z] of the free input channel (S54), and outputs the switching information to input/output controller 33, thereby instructing input/output controller 33 to output the target video stream from Ho[y] to Ei[z] (S55).

Input/output controller 33 outputs the resolution change instruction information to camera 20 (Hd[x]) serving as the video source of the target video stream, thereby giving an instruction to increase the resolution of the target video stream (S56). As a result, after the resolution of the target video stream is increased, the video stream is output from Ho[y] to Ei[z].

Furthermore, switcher 43 outputs the editing information to video editor 44, thereby instructing video editor 44 to display the video stream input to the input channel Ei[z] specified in step S54 in the target video frame (S57). Next, switcher 43 updates the second management information and the GUI (S58).

In a case where it is determined in step S52 that the target video stream is input (Yes in S52), switcher 43 specifies the number Ei[z] of the input channel to which the target video stream is input and the number Ho[y] of the output channel of video hub 30 connected to Ei[z] (S59). Switcher 43 outputs the resolution change instruction information to camera 20 (Hd[x]) that outputs the target video stream to Ho[y], thereby instructing camera 20 to increase the resolution of the target video stream (S60). The resolution change instruction information is output to camera 20 (Hd[x]) via input/output controller 33, and is output from Ho[y] to Ei[z] after the resolution of the target video stream is increased.

Note that, in a case where the resolution of the target video stream has already been increased, the processing of step S60 is omitted. For example, if it is managed whether the resolution of the video stream is increased in the second management information, switcher 43 can determine whether the resolution of the video stream is increased by referring to the second management information.

Then, by outputting the editing information to video editor 44, switcher 43 instructs video editor 44 to display the video stream input to Ei[z] in the target video frame (S61).

As described above, video editing system 10 can increase the resolution of the n video streams input to video hub 30 only when necessary, and can reduce the amount of communication between the plurality of cameras 20 and video hub 30.

Note that, in Example 2 of the assignment operation, camera 20 selectively outputs the low-resolution video stream and the high-resolution video stream, but may simultaneously output the low-resolution video stream and the high-resolution video stream. As a result, it is possible to suppress the load of the information processing in video editing device 40 and to realize the switching of the resolution of the video stream.

Further, in Example 2 of the assignment operation, the level of the resolution of the video stream is changed (switched), but the level of the frame rate may be changed instead of the resolution. In Example 2 of the assigning operation, the resolution may be read as a frame rate. In Example 2 of the assignment operation, the data amount (bit rate) per unit time of the video stream output from camera 20 to video hub 30 may be significantly changed. In other words, in steps S56 and S60, change instruction information for instructing camera 20 (video source) to change the data amount of the video stream may be output.

### [Modification 1 of Video Source List]

In the example of the GUI of Fig. 2, the thumbnail and the meta information are displayed in order to identify the video source in video source list 62a, but a name (nickname) desired by the user to distinguish the video source from other video sources can also be set in the video source (video stream). For example, the user sets a name to the video source by operating operation receiver 61. Specifically, the user can set a place (such as a studio name) where camera 20 is installed.

In this case, in video source list 62a, a thumbnail and a name set by the user are displayed for one video source (video stream). That is, in video source list 62a, the name set for each of the plurality of video streams by the user to distinguish the plurality of video streams is displayed. Note that the set name may be displayed instead of the meta information, or may be displayed in addition to the meta information.

As a result, the user can select a video source (video stream) desired to be used for the output video based on the set name.

### [Modification 2 of Video Source List]

Furthermore, the meta information output from camera 20 to video hub 30 may include position information indicating a position where camera 20 is installed (for example, coordinates such as latitude and longitude), and the installation position of camera 20 may be displayed in video source list 62a.

For example, in a case where camera 20 includes a global navigation satellite system (GNSS) module such as a global positioning system (GPS) module, camera 20 can measure position information and output the position information to video hub 30.

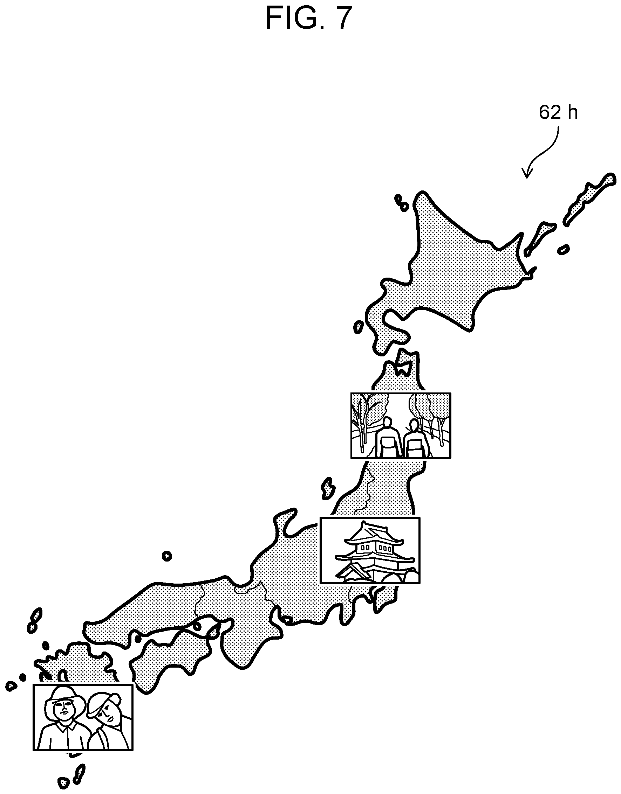

In this case, input/output controller 33 acquires the meta information including the position information indicating the installation position of camera 20 and the thumbnail information from each of the plurality of cameras 20. Switcher 43 can generate the GUI information for displaying the video source list as illustrated in Fig. 7 by acquiring the meta information and the thumbnail information from input/output controller 33 through aggregator 34. Fig. 7 is a view illustrating Modification 2 of a video source list.

As illustrated in Fig. 7, in video source list 62h, the installation positions of the plurality of cameras 20 are displayed on the map based on the position information included in the acquired meta information. More specifically, switcher 43 displays the thumbnails of the video streams output from the cameras 20 at the installation positions of the plurality of cameras 20 on the map based on the thumbnail information and the position information.

As a result, the user can select a video source (video stream) desired to be used for the output video from the map.

### [Modification 3 of Video Source List]

Furthermore, at least one of the image feature quantity and the audio feature quantity obtained by analyzing the video stream may be displayed in video source list 62a.

For example, when acquiring a video stream from each of the plurality of cameras 20, input/output controller 33 can calculate the image feature quantity by performing image analysis on the acquired video stream. The image feature quantity is, for example, the number of people appearing in the video stream, and the number of people can be calculated by applying an existing algorithm for detecting a person to the video stream.

Furthermore, when acquiring a video stream from each of the plurality of cameras 20, input/output controller 33 can calculate an audio feature quantity by performing audio analysis on a sound signal included in the acquired video stream. The audio feature quantity is, for example, an S/N ratio of a sound signal (how much a sound component is included with respect to a noise component), and can be calculated by applying a spectral subtraction method or the like to the sound signal.

Switcher 43 can acquire at least one feature quantity of the image feature quantity and the audio feature quantity calculated in this manner via aggregator 34. By including the acquired at least one feature quantity in the GUI information and outputting the GUI information to PC 60, switcher 43 can display the at least one feature quantity of each of the plurality of video streams in video source list 62a.

For example, when the thumbnails of the video streams (video sources) are sorted and displayed according to the number of people shown in the video stream, the user can select the video stream to be displayed in the video frame based on the number of people.

Furthermore, if the thumbnails of the video streams (video sources) are sorted and displayed according to the S/N ratio of the sound signal included in the video stream, the user can select the video stream to be displayed in the video frame based on whether or not a large amount of audio is included (whether the place is crowded with many people).

### [Effects and the like]

As described above, the display method executed by the computer such as video editing system 10 is a display method for generating an output video by selectively using a plurality of video streams. The display method includes: acquiring the plurality of video streams from a plurality of cameras 20; displaying video source list 62a indicating the acquired plurality of video streams on display 62; and receiving a selection by a user of a first video stream to be used for the output video among the displayed plurality of video streams. In video source list 62a, a display mode is different between the first video stream selected and a second video stream which is not selected by the user as a video stream to be used for the output video among the plurality of video streams. Camera 20 is an example of a video source, and video source list 62a is an example of an image indicating a plurality of video streams. "To be used for the output video" has a meaning close to "to be preset in the video frame" in the above exemplary embodiments.

Such a display method can assist the user in editing the video stream.

For example, an upper limit is set for a number of the first video streams that is simultaneously selectable. The display method further includes displaying a warning on display 62 when the user performs an operation exceeding the upper limit.

Such a display method can assist the user to grasp the number of first video streams that can be simultaneously selected.

For example, an upper limit is set for a number of the first video streams that is simultaneously selectable. The display method further includes displaying the upper limit and the number of first video streams.

Such a display method can assist the user to grasp the number of first video streams that can be simultaneously selected.

Further, for example, the upper limit is smaller than a total number of the plurality of video streams indicated by video source list 62a.

Such a display method can assist the user in grasping the number of first video streams that can be simultaneously selected when the number of video streams input to video editing device 40 is smaller than the number of video streams input to video hub 30.

Furthermore, for example, in video source list 62a, a name set by the user for each of the plurality of video streams is displayed.

Such a display method can assist the user in selecting a video stream based on a set name.

Furthermore, for example, the display method further includes acquiring position information indicating an installation position of each of the plurality of video sources from the plurality of cameras 20. In video source list 62h, the installation position of each of the plurality of cameras 20 is displayed on a map based on the acquired position information.

Such a display method can assist the user in selecting a video stream based on the installation position of camera 20.

In addition, for example, the display method further includes analyzing the plurality of video streams acquired, to calculate at least one feature quantity of an image feature quantity and an audio feature quantity for each of the plurality of video streams. In video source list 62a, the at least one feature quantity of each of the plurality of video streams is displayed.

Such a display method can assist the user in selecting the video stream based on the at least one feature quantity of the image feature quantity and the audio feature quantity.

Furthermore, for example, change instruction information for instructing the plurality of cameras 20 to change data amounts of the plurality of video streams is further output.

Such a display method can assist the user in selecting the video stream based on the at least one feature quantity of the image feature quantity and the audio feature quantity.

Further, video editing system 10 is a video editing system that generates an output video by selectively using a plurality of video streams. Included are: video hub 30 (input/output controller 33) that acquires the plurality of video streams from a plurality of cameras 20; video editing device 40 (switcher 43) that displays video source list 62a indicating the acquired plurality of video streams on PC60 (display 62); and PC 60 (operation receiver 61) that receives a selection by a user of a first video stream to be used for the output video among the plurality of video streams displayed. In video source list 62a, a display mode is different between the first video stream selected and a second video stream which is not selected by the user as a video stream to be used for the output video among the plurality of video streams. Video hub 30 (input/output controller 33) is an example of an acquirer, and video editing device 40 (switcher 43) is an example of a display controller.

Such video editing system 10 can support editing of a video stream by the user.

### (Other exemplary embodiments)

Although the exemplary embodiment has been described above, the present disclosure is not limited to the exemplary embodiment.

For example, in the above exemplary embodiments, the video editing system is implemented by a plurality of devices. In this case, the components included in the video editing system described in the above exemplary embodiments may be distributed in any manner to a plurality of devices. For example, the video editing system may be implemented by a first cloud server having a function of a video hub and a second cloud server having a function of a video editing device. In this case, a cloud server having an information processing capability suitable for realizing the function of the video hub is employed as the first cloud server, and a cloud server having an information processing capability suitable for realizing the function of the video editing device is employed as the second cloud server, whereby the limited computer resources can be effectively used.

Furthermore, the video editing system may be implemented as a single device. For example, the video editing system may be realized as a single cloud server having a function of the video hub and a function of the video editing device.

In addition, in the above exemplary embodiment, processing executed by a specific processing unit may be executed by another processing unit. Furthermore, the order of a plurality of processing may be changed, or a plurality of processing may be executed in parallel.

In the above exemplary embodiments, each component may be implemented by executing a software program suitable for each component. Each component may be implemented by a program execution unit such as a CPU or a processor reading and executing a software program recorded in a recording medium such as a hard disk or a semiconductor memory.

In addition, each component may be implemented by hardware. Each of the constituent elements may be a circuit (or an integrated circuit). These circuits may constitute one circuit as a whole or may be separate circuits. Each of these circuits may be a general-purpose circuit or a dedicated circuit.

In addition, general or specific aspects of the present disclosure may be implemented by a system, an apparatus, a method, an integrated circuit, a computer program, or a computer-readable recording medium such as a CD-ROM. In addition, the present disclosure may be implemented by an arbitrary combination of a system, an apparatus, a method, an integrated circuit, a computer program, and a recording medium.

For example, the present disclosure may be implemented as the video hub or the video editing device of the above exemplary embodiments. Further, the present disclosure may be implemented as a display method executed by a computer such as the video editing system of the above exemplary embodiment. The present disclosure may be implemented as a program (computer program product) for causing a computer to execute such a display method, or may be realized as a computer-readable non-transitory recording medium in which such a program is recorded.

In addition, the present disclosure also includes a mode obtained by applying various modifications conceived by those skilled in the art to each exemplary embodiment, or a mode realized by arbitrarily combining components and functions in each exemplary embodiment within a range not departing from the gist of the present disclosure.

### REFERENCE MARKS IN THE DRAWINGS

- 10: video editing system
- 20: camera
- 30: video hub
- 31: first information processor
- 32: first storage
- 33: input/output controller
- 34: aggregator
- 40: video editing device
- 41: second information processor
- 42: second storage
- 43: switcher
- 44: video editor
- 50: video distribution server
- 60: PC
- 61: operation receiver
- 62: display
- 62a: video source list
- 62b: scene element list
- 62c: scene arranger
- 62d: property list
- 62e: switching section
- 62f: output video display
- 62g: capacity display
- 62h: video source list
- 63: third information processor
- 64: third storage

## Claims

1. A display method for generating an output video by selectively using a plurality of video streams, the display method comprising:
acquiring the plurality of video streams from a plurality of video sources;
displaying on a display an image indicating the plurality of video streams acquired; and
receiving a selection by a user of at least one first video stream to be used for the output video among the plurality of video streams displayed, wherein
in the image, a display mode is different between the at least one first video stream selected and a second video stream which is not selected by the user as a video stream to be used for the output video among the plurality of video streams.

2. The display method according to Claim 1, wherein
an upper limit is set for a number of the at least one first video stream that is simultaneously selectable, and
the display method further comprises displaying a warning on the display when an operation exceeding the upper limit is performed by the user.

3. The display method according to Claim 1, wherein
an upper limit is set for a number of the at least one first video stream that is simultaneously selectable, and
the display method further comprises displaying the upper limit and the number of the at least one first video stream.

4. The display method according to Claim 2 or 3, wherein
the upper limit is smaller than a total number of the plurality of video streams indicated by the image.

5. The display method according to Claim 1, wherein
a name set by the user for each of the plurality of video streams is displayed on the image.

6. The display method according to Claim 1, further comprising acquiring position information indicating an installation position of each of the plurality of video sources from the plurality of video sources, wherein
in the image, the installation position of each of the plurality of video sources is displayed on a map based on the position information acquired.

7. The display method according to Claim 1, further comprising analyzing the plurality of video streams acquired, to calculate at least one feature quantity of an image feature quantity and an audio feature quantity for each of the plurality of video streams, wherein
the at least one feature quantity of each of the plurality of video streams is displayed on the image.

8. The display method according to Claim 1, further comprising outputting change instruction information for instructing the plurality of video sources to change data amounts of the plurality of video streams.

9. A program for causing a computer to execute the display method according to claim 1.

10. A video editing system that generates an output video by selectively using a plurality of video streams, the video editing system comprising:
an acquirer that acquires the plurality of video streams from a plurality of video sources;
a display controller that displays on a display an image indicating the plurality of video streams acquired; and
an operation receiver that receives a selection by a user of a first video stream to be used for the output video among the plurality of video streams displayed, wherein
in the image, a display mode is different between the first video stream selected and a second video stream which is not selected by the user as a video stream to be used for the output video among the plurality of video streams.
